Europäisches Patentamt

European Patent Office

Office européen des brevets

(19)

(11) **EP 1 059 482 A1**

(12) **DEMANDE DE BREVET EUROPEEN**

(43) Date de publication:
**13.12.2000 Bulletin 2000/50**

(51) Int Cl.[7]: **F17D 1/04**, F17D 3/14

(21) Numéro de dépôt: **00401397.5**

(22) Date de dépôt: **19.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **08.06.1999 FR 9907191**

(71) Demandeurs:
- **L'AIR LIQUIDE, SOCIETE ANONYME POUR L'ETUDE ET L'EXPLOITATION DES PROCEDES GEORGES CLAUDE**
  **75321 Paris Cédex 07 (FR)**
- **Air Liquide Electronics Systems**
  **75007 Paris (FR)**

(72) Inventeurs:
- **Girard, Jean-Marc**
  **75321 Paris Cedex 07 (FR)**
- **McAndrew, James**
  **75321 Paris Cedex 07 (FR)**
- **Duchâteau, Eric,**
  **Air Liquide Electronics Systems**
  **38800 Le Pont de Claix (FR)**
- **Lefèvre, Bertrand, c/o L'Air Liquide**
  **75321 Paris Cedex 07 (FR)**

(74) Mandataire: **Vesin, Jacques et al**
  **L'AIR LIQUIDE, S.A.,**
  **Service Propriété Industrielle,**
  **75, Quai d'Orsay**
  **75321 Paris Cédex 07 (FR)**

(54) **Procédé et dispositif de mise en gaz d'une ligne de distribution de gaz corrosif**

(57) La présente invention a pour objet un procédé et un dispositif de mise en gaz d'une ligne de distribution (20) de gaz corrosif. Ledit procédé est un procédé de mise en gaz, avec passivation, d'une ligne de distribution (20) de gaz corrosif, destinée à distribuer ledit gaz corrosif à un système (3) situé en aval immédiat de ladite ligne (20) ; procédé qui comprend :

- le conditionnement préalable de ladite ligne (20) ;
- la mise en gaz proprement dite de ladite ligne (20) avec ledit gaz corrosif dit gaz actif ;

De façon caractéristique, ladite mise en gaz proprement dite comprend :

- au moins un cycle, de mise en gaz actif de ladite ligne (20) jusqu'à l'amont immédiat du système (3) et d'évacuation dudit gaz actif ainsi introduit dans ladite ligne (20) ; ladite évacuation étant mise en oeuvre sans passage dudit gaz actif au travers dudit système (3) ;
- suivi de la mise en gaz finale de ladite ligne (20) pour la mise à disposition dudit gaz audit système (3).

FIG.4

EP 1 059 482 A1

## Description

La présente invention a pour objet un procédé et un dispositif, de mise en gaz d'une ligne de distribution de gaz corrosif. Elle a plus précisément pour objet, un procédé et son dispositif associé, pour la mise en gaz, avec passivation, d'une ligne de distribution de gaz corrosif ; ladite ligne étant destinée à distribuer ledit gaz corrosif à un système situé en aval immédiat de celle-ci et ledit gaz corrosif étant susceptible de la passiver.

Le problème technique de l'obtention d'une passivation performante de telles lignes de distribution de gaz corrosifs, en vue d'assurer, d'une part, une protection efficace, vis-à-vis de la corrosion, desdites lignes et desdits systèmes alimentés en lesdits gaz par lesdites lignes, et, d'autre part, une distribution de gaz corrosifs ultra purs, est connu de l'homme du métier.

A ce jour, il n'a pas été proposé de solutions réellement satisfaisantes audit problème technique (on est toujours notamment confronté à des problèmes de corrosion sur la ligne et sur l'équipement en aval) ; l'opération de mise en gaz se déroulant classiquement selon les étapes successives ci-après :

- une première étape de conditionnement de la ligne : cette première étape comprend au moins une purge et un test de fuite. Elle comprend généralement des séquences successives de purge par un même gaz inerte, un même mélange de gaz inerte ou plusieurs gaz ou mélange de gaz inertes, afin :

  + d'éliminer les impuretés et notamment l'eau, adsorbée sur la paroi interne de la ligne (ladite eau accélérant la corrosion, en présence de gaz corrosif) ;
  + de vérifier l'étanchéité et l'intégrité de ladite ligne par des méthodes traditionnelles, connues de l'homme du métier ;
  + éventuellement, de suivre de manière analytique, les paramètres d'intégrité de ladite ligne, comme l'hygrométrie, la teneur en oxygène, le nombre de particules véhiculées par le gaz de purge et apportées par ladite ligne (ledit gaz de purge étant évidemment propre, "exempt" d'eau, d'oxygène, de particules).

A l'issue de ce conditionnement de ladite ligne, on évacue (on purge) le gaz inerte (ou mélange de gaz inerte) qui s'y trouve contenu. Ledit gaz inerte (ou mélange de gaz inerte) est généralement pompé, pour son évacuation, via l'équipement situé en bout de ligne ;

- une seconde étape de mise en gaz actif de ladite ligne : la ligne est remplie avec le gaz actif (corrosif). Ledit gaz est ainsi mis à disposition de l'équipement.

La quantité de gaz actif, introduite dans ladite ligne conditionnée, pour la mise en gaz de ladite ligne (pour le "premier remplissage" de ladite ligne en ledit gaz actif), est ensuite généralement laissée dans celle-ci puis, lors de la mise en service de ladite ligne, débitée en aval, dans l'équipement, pour l'alimentation en gaz actif dudit équipement. Cette quantité de gaz actif - certes limitée mais en aucune façon négligeable ; en tout état de cause, proportionnelle à la longueur et au carré du diamètre de la ligne concernée - peut être qualifiée de quantité d'amorçage, de démarrage, de mise en service.

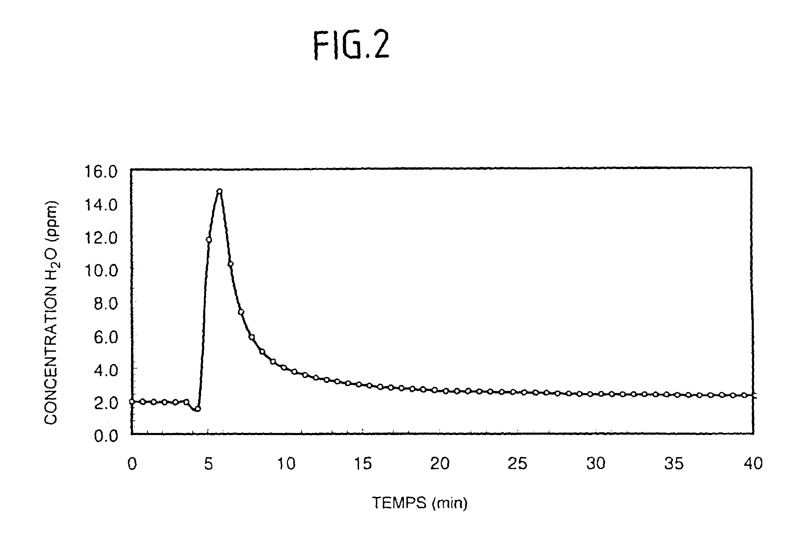

Il est du mérite de la Demanderesse d'avoir clairement établi, de façon non évidente, que cette quantité de gaz actif, utilisée pour la mise en gaz actif de la ligne, et plus généralement que les premières quantités de gaz actifs délivrées, étaient susceptibles de générer les problèmes de corrosion évoqués ci-dessus ; et ceci, quelle que soit la rigueur de mise en oeuvre du conditionnement préalable de ladite ligne. En effet, la Demanderesse a clairement établi (voir la figure 2 annexée à la présente description) que le gaz corrosif, en générant lors de ses "premiers passages" dans la ligne la couche de passivation à partir de la couche superficielle d'oxydes de ladite ligne, génère aussi de l'eau ; ladite eau rendant ledit gaz plus corrosif et étant susceptible, d'une part, de nuire à la formation de ladite couche de passivation et, d'autre part, d'altérer ladite couche de passivation formée. Ainsi, quelle que soit la rigueur du conditionnement préalable, en référence au paramètre hygrométrie, il y a toujours génération, *in situ,* après ledit conditionnement, d'eau. On a inéluctablement, par exemple, sur les parois internes d'une canalisation en acier ou en fer. mises en contact avec du HCl gazeux (gaz corrosif), le développement de la réaction chimique ci-après :

$$Fe_2O_3 + 6\ HCl \rightarrow 2\ FeCl_3 + 3H_2O.$$

Ce type de réactions, connues en elles-mêmes, n'avait jamais été évoqué dans le contexte particulier de la mise en gaz de lignes de distribution de gaz corrosifs. Il est du mérite de la Demanderesse d'avoir établi le lien.

Dans le cadre de la présente invention, la Demanderesse préconise donc de limiter au maximum les effets néfastes de l'eau générée *in situ*, lors de la formation de la couche de passivation. A cette fin, elle propose un procédé original et particulièrement performant, du point de vue de la passivation recherchée et de la corrosion engendrée, pour la mise en gaz d'une ligne de distribution de gaz corrosif ; ladite ligne étant destinée à distribuer ledit gaz corrosif à un système (généralement un équipement) situé en aval immédiat de ladite ligne. Les composants dudit système seront d'autant plus fiables (en d'autres termes, le risque de dysfonctionnement dudit système sera d'autant plus faible) que l'agressivité du gaz aura été minimisée, que la présence d'eau au sein dudit gaz aura été minimisée ...

Ladite ligne approvisionne directement ledit système en ledit gaz. Elle apporte ledit gaz à l'entrée dudit système. On comprend le pourquoi de la localisation du système à alimenter en gaz en aval immédiat de la ligne, à la considération des propos ci-dessus sur les méthodes de conditionnement et de la description ci-après du procédé de l'invention. En effet, il ne s'agit évidemment pas de préparer soigneusement une ligne en le "lointain" amont du système à alimenter pour ensuite utiliser ladite ligne, préparée, et un prolongement de celle-ci ou une autre ligne, non préparée, en l'amont immédiat dudit système pour alimenter celui-ci. Sur la partie non préparée, on rencontrerait inéluctablement les problèmes évoqués ci-dessus, ce qui annihilerait tout aussi inéluctablement les effets de la préparation en le "lointain" amont.

Le procédé de l'invention est ainsi généralement mis en oeuvre sur l'intégralité du système de distribution du gaz actif. Il peut toutefois bien évidemment être seulement mis en oeuvre sur une partie de celui-ci, dans l'hypothèse où l'on ajoute une nouvelle ligne ou une prolongation de ligne sur un réseau dont la partie amont a déjà été "traitée" au sens de l'invention.

Le procédé de l'invention comprend, successivement, les étapes classiques du procédé de l'art antérieur, à savoir :

- le conditionnement préalable de la ligne (conditionnement tel que décrit dans l'introduction de la présente description, à l'issue duquel ladite ligne se trouve sèche, propre, vide de tout gaz) ;
- la mise en gaz proprement dite de ladite ligne avec le gaz corrosif dit gaz actif.

Il se caractérise par une mise en oeuvre originale de la seconde desdites étapes. En effet, conformément à l'invention, ladite mise en gaz proprement dite comprend :

- au moins un cycle, de mise en gaz actif de ladite ligne jusqu'à l'amont immédiat du système et d'évacuation dudit gaz actif ainsi introduit dans ladite ligne ; ladite évacuation étant mise en oeuvre sans passage dudit gaz actif au travers dudit système ;
- suivi de la mise en gaz finale de ladite ligne pour la mise à disposition dudit gaz audit système.

Ainsi, de façon caractéristique, selon le procédé de l'invention, la(les) première(s) quantité(s) de gaz actif introduite(s) dans ladite ligne (au moins ladite première quantité, qualifiée ci-dessus de quantité de démarrage, d'amorçage) est(sont) évacuée(s) de ladite ligne, sans être débitée(s) en aval dans le système. Ledit système est ainsi préservé de tout contact, de toute réaction, avec la(les)dite(s) première(s) quantité(s) de gaz, chargée(s) en eau, ainsi rendue(s) plus corrosive(s).

Selon l'invention, le gaz actif, introduit lors de la mise en gaz actif d'une ligne alimentant un système, n'est pas débité dans ledit système (ce qui serait conforme à l'enseignement de l'art antérieur) ; il est évacué en amont de celui-ci. Ainsi, on optimise l'intervention dudit gaz actif, en référence à la passivation de ladite ligne, tout en préservant ledit système dudit gaz actif, rendu humide, donc plus agressif, tout en préservant donc ledit système de la corrosion dont ledit gaz actif humide serait inéluctablement responsable, si il traversait ledit système, si il était évacuée en aval. Ledit système y gagne beaucoup en terme de fiabilité. Il se trouve ainsi préservé :

- d'une corrosion "directe" par ledit gaz actif humide,
- de tout dommage susceptible d'être occasionné par les particules métalliques résultantes de la dégradation, par la corrosion, des parois internes de la ligne.

De la même façon, le procédé mis en oeuvre au sein dudit système (procédé qui utilise le gaz actif) se trouve préservé de toute contamination par l'eau et lesdites particules métalliques.

De façon caractéristique, selon le procédé de l'invention, la(les) première(s) quantité(s) de gaz actif débitée(s) (polluée(s) par l'eau générée in situ) n'(ne) est(sont) pas débité(es) sur le système à alimenter.

La mise en oeuvre du procédé de l'invention et l'optimisation de celle-ci est à la portée de l'homme du métier. Il convient bien évidemment de prévoir, en sus des moyens nécessaires à une mise en gaz classique, des moyens (pompe, par exemple) pour évacuer le gaz actif introduit, en amont du système. Ceci est décrit plus en détail dans le présent texte.

L'homme du métier saura effectivement gérer le nombre de cycles, d'introduction et d'évacuation du gaz actif, (au moins un, évidemment) ainsi que la durée de chacun de ceux-ci, pour une optimisation du résultat recherché (en termes de passivation de la ligne et de diminution de la corrosion dans ladite ligne et le système en aval).

De façon nullement limitative, on peut préciser ce qui suit. Le premier cycle (unique cycle ou premier d'au moins deux cycles) peut être mis en oeuvre de façon rapide, dans la mesure où les oxydes, directement au contact du gaz corrosif, réagissent rapidement : ainsi, le gaz actif peut être introduit dans la ligne concernée et re-pompé de celle-ci, quasi immédiatement (en moins de 10 minutes, généralement au bout de 1 à quelques minutes). Pour le ou les cycles suivants, il est judicieux de laisser le gaz actif un peu plus longtemps dans la ligne : il doit avoir le temps de diffuser, pour générer une passivation, "en profondeur". Une telle passivation "en profondeur" est généralement susceptible d'être obtenue, en tout état de cause, en moins de 24 heures.

Selon un mode de mise en oeuvre particulièrement avantageux du procédé de l'invention, la mise en gaz proprement dite (mise en gaz actif) comprend n cycles successifs, n étant un nombre entier supérieur à 1, de mise en gaz actif et d'évacuation dudit gaz actif, mis en oeuvre avec un suivi de la teneur en eau dudit gaz actif évacué ; la mise en gaz finale étant opérée à l'issue du n$^{ième}$ cycle, (premier cycle) au cours duquel il n'y a pas eu génération d'eau. On entend logiquement ici, par mise en gaz finale, la mise en gaz actif à l'issue de laquelle le gaz actif en question est débité sur le système, en aval de la ligne. A l'issue de ces n cycles, toute l'eau susceptible d'être générée a été générée et évacuée (sans contact avec ledit système).

En tout état de cause, la mise en oeuvre d'un unique cycle au sens de l'invention est avantageuse. Généralement, dans le cadre du procédé selon l'invention, on met successivement en oeuvre au moins deux cycles. Avantageusement, comme précisé ci-dessus, on met successivement en oeuvre, n cycles, avec un suivi de la quantité d'eau générée. Un tel suivi peut être basé sur diverses méthodes analytiques. La méthode sélectionnée doit évidemment être compatible avec le gaz corrosif humide intervenant et avantageusement permettre des analyses en des temps courts. Avantageusement, des techniques de mesure de $H_2O$ par spectroscopie d'absorption infrarouge sont mises en oeuvre.

On se propose maintenant de préciser quelque peu le contexte du procédé de l'invention.

Le gaz actif concerné est, comme indiqué précédemment, un gaz corrosif. Il peut notamment s'agir d'un gaz choisi parmi $F_2$, $Cl_2$, $Br_2$, HF, HCl, HBr, HI, $ClF_3$ et les mélanges gazeux renfermant au moins l'un de ces gaz. Cette liste n'est, en tout état de cause, pas exhaustive. Le procédé de l'invention est avantageusement mis en oeuvre sur une ligne, alimentant une unité de fabrication de l'industrie des semi-conducteurs, en l'un des gaz listés ci-dessus, notamment en HCl, HF ou HBr.

Le procédé de l'invention est par ailleurs mis en oeuvre pour la mise en gaz, avec passivation, d'une quelconque ligne de distribution d'un gaz corrosif, ligne destinée à distribuer ledit gaz corrosif à un système situé en aval immédiat de ladite ligne (système d'utilisation dudit gaz ou système intermédiaire). Une telle ligne de distribution est notamment susceptible de relier :

> a) une armoire d'alimentation en gaz ("a gas cabinet" ou GC, ce terme est familier à l'homme du métier), à, directement, un système consistant en l'équipement à alimenter en ledit gaz, en l'équipement utilisateur dudit gaz. Une telle armoire peut renfermer dans sa structure un dispositif ("a valve manifold box " ou VMB, voir le paragraphe ci-dessous) lui permettant d'alimenter plusieurs lignes en parallèle ;
> b) une armoire d'alimentation en gaz ("a gas cabinet" ou GC) à un système, consistant en une armoire de distribution dudit gaz ("a valve manifold box " ou VMB, terme également familier à l'homme du métier) ;
> c) une armoire de distribution de gaz ("a valve manifold box" ou VMB) à un système, consistant en l'équipement à alimenter en ledit gaz, en l'équipement utilisateur dudit gaz.

Le procédé de l'invention peut ainsi être mis en oeuvre dans différents contextes et notamment, successivement, sur une ligne du type b ci-dessus puis sur une ligne du type c ci-dessus, pour la délivrance dudit gaz respectivement de l'armoire d'alimentation (GC) dans l'armoire de distribution (VMB), puis de ladite armoire de distribution (VMB) dans l'équipement.

Quel que soit son contexte de mise en oeuvre, ledit procédé optimise la passivation de la ligne de distribution, avec les premières quantités de gaz délivrées ; celles-ci n'étant pas distribuées au système mais évacuées en amont dudit système, le préservant ainsi de la corrosion. A l'issue de la mise en oeuvre d'un tel procédé, ladite ligne de distribution est susceptible de délivrer, sans le polluer, un gaz corrosif ultra pur.

Selon un autre de ses objets, la présente invention concerne un dispositif utile à la mise en oeuvre du procédé (constituant le premier desdits objets) décrit ci-dessus. Ledit dispositif convient pour la mise en gaz, avec passivation, d'une ligne de distribution de gaz corrosif ou gaz actif, destinée à distribuer ledit gaz corrosif à un système situé en aval immédiat de ladite ligne. Il comprend, de façon classique :

- montées sur ladite ligne, une première vanne d'arrêt pour l'alimentation de ladite ligne en ledit gaz et une seconde vanne d'arrêt pour l'alimentation dudit système en ledit gaz (ladite première vanne d'arrêt est à l'entrée de ladite ligne, tandis que ladite seconde vanne d'arrêt est à la sortie de celle-ci) ;
- associés à ladite ligne, des moyens pour sa mise en gaz inerte et pour l'évacuation de celle-ci du gaz inerte intervenu (lesdits moyens permettant de purger et qualifier la ligne, préalablement à sa mise en gaz actif).

De façon caractéristique, il comprend en outre :

- des moyens pour purger ladite ligne dudit gaz actif, introduit entre lesdites première et seconde vannes d'arrêt ; lesdits moyens permettant la mise en oeuvre de ladite purge sans passage dudit gaz actif purgé au travers dudit système.

Lesdits moyens doivent permettre une évacuation des premières quantités de gaz actif introduites (d'au moins la première quantité de gaz introduite) dans la ligne, évacuation par l'amont du système, par l'amont de la seconde vanne d'arrêt isolant ledit système. Lesdits moyens peuvent notamment comprendre une vanne montée sur ladite ligne et reliée à des moyens de pompage ; lesdits moyens de pompage étant aptes à purger ladite ligne du gaz actif introduit dans celle-ci, une telle purge étant mise en oeuvre avec les première et seconde vannes d'arrêt évidemment fermées. On notera incidemment que lesdits moyens de purge en gaz actif peuvent être utilisés, préalablement à la mise en gaz actif, pour l'opération de mise en gaz inerte de la ligne (pour l'évacuation, dudit gaz inerte, de ladite ligne).

Avantageusement, le dispositif de l'invention comprend, montée sur la ligne concernée, une vanne quatre voies reliée à l'alimentation en gaz inerte et aux moyens de purge, indispensables pour purger les premières quantités de gaz actif introduites dans ladite ligne. Ladite vanne quatre voies intervient dans deux premières positions successives, pour la mise en gaz inerte préalable de la ligne à des fins de purge et de qualification et, dans deux autres positions successives, pour chaque cycle de mise en gaz actif de la ligne et d'évacuation dudit gaz actif. De telles vannes quatre voies, convenant ainsi à une mise en oeuvre avantageuse du procédé de l'invention, ont notamment été décrites par la Demanderesse dans la demande de brevet EP-A-0 814 298.

On a vu par ailleurs que le procédé de l'invention comprend avantageusement n cycles successifs, de mise en gaz actif de la ligne et d'évacuation dudit gaz actif, mis en oeuvre avec un suivi de la teneur en eau du gaz actif évacué. Pour la mise en oeuvre de cette variante avantageuse dudit procédé, le dispositif précisé ci-dessus comprend donc avantageusement, en outre, des moyens pour mesurer la teneur en eau du gaz actif purgé. Lorsque cette teneur en eau est jugée acceptable, voire avantageusement lorsqu'elle est égale à la teneur en eau du gaz actif qui entre dans la ligne, une passivation correcte, voire optimale, a été obtenue. La ligne de distribution peut alors être mise en gaz pour utilisation, pour délivrance du gaz actif dans le système, les première et seconde vannes d'arrêt étant ouvertes. L'homme du métier est à même de sélectionner un moyen performant pour mesurer ladite teneur en eau du gaz actif purgé et d'intégrer ledit moyen sur la ligne d'évacuation dudit gaz actif purgé.

On se propose maintenant de décrire l'invention, sous ses deux aspects de procédé et de dispositif, en référence aux figures annexées.

La figure 1 représente, schématiquement, une installation typique de distribution de gaz corrosif, selon l'art antérieur.

La figure 2 illustre le phénomène clairement identifié par la Demanderesse, responsable des problèmes de l'art antérieur : celui de la génération, in situ, d'eau, lors de la mise en gaz actif d'une ligne métallique (génération à t = 4 min.).

La figure 3 représente, schématiquement, l'installation de l'art antérieur, selon la figure 1, telle que modifiée selon une première variante, pour la mise en oeuvre du procédé de l'invention entre une armoire de distribution et un équipement.

La figure 4 représente, schématiquement, l'installation de l'art antérieur, selon la figure 1, telle que modifiée selon une autre variante, préférée, pour la mise en oeuvre du procédé selon l'invention entre une armoire de distribution et un équipement.

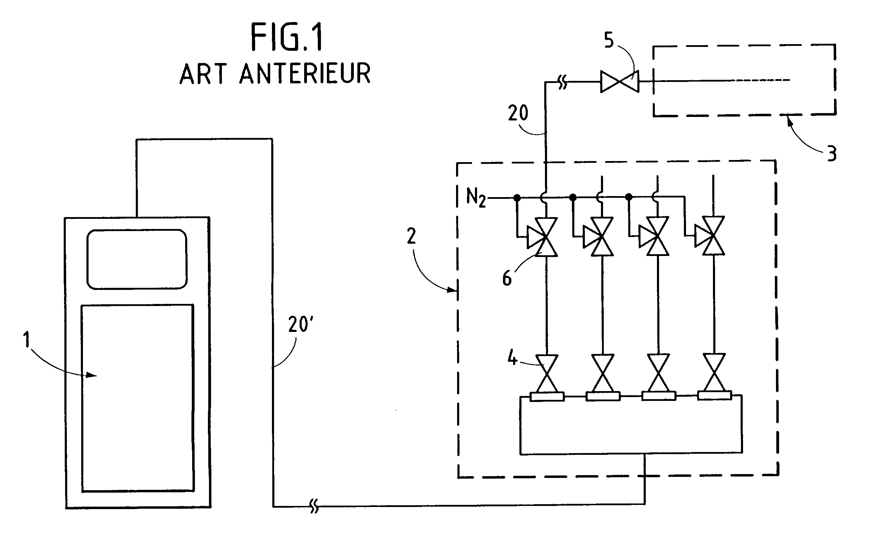

Les figures 1, 3 et 4 schématisent un contexte de mise en gaz d'une ligne de distribution 20 ; ladite ligne 20 reliant une armoire de distribution (VMB) 2 à un équipement quelconque 3.

Ladite armoire de distribution 2 est susceptible d'alimenter quatre lignes. Elle est elle-même alimentée, en le gaz corrosif à distribuer, à partir de l'armoire d'alimentation (GC) 1 *via* la ligne 20'.

On se limite ici à évoquer l'art antérieur et à décrire l'invention, en référence à la mise en gaz actif (corrosif) de ladite ligne 20. On fait présentement abstraction du problème de la mise en gaz actif de la ligne 20' reliant ladite armoire d'alimentation 1 à ladite armoire de distribution 2. Ledit problème est le même et peut, de la même façon, être résolu par la mise en oeuvre de l'invention.

Selon l'art antérieur (figure 1), la ligne 20 est préalablement conditionnée. Pour des raisons de simplification, on a seulement schématisé l'intervention d'azote. Ledit azote est introduit dans ladite ligne 20 par le biais de la vanne 6 ; les vannes d'arrêt (vannes tout ou rien) 4 et 5 étant évidemment fermées. Au cours dudit conditionnement ainsi qu'à l'issue de celui-ci, ledit azote est débité dans le système 3, *via* la vanne d'arrêt 5 ouverte.

Pour la mise en gaz proprement dite de la ligne 20, la vanne d'arrêt 4 est ouverte, la vanne d'arrêt 5 et la vanne 6 étant évidemment fermées.

A l'issue de cette mise en gaz actif, selon l'art antérieur, le gaz actif est susceptible d'être débité à volonté dans le système 3 (à partir de l'armoire d'alimentation 1, *via* l'armoire de distribution 2), les vannes 4 et 5 étant ouvertes. Tout le gaz actif introduit dans la ligne 20 est ainsi débité dans ledit système 3.

Le procédé de l'art antérieur, décrit en référence à ladite figure 1, a notamment été mis en oeuvre, par les inventeurs, pour une mise en gaz actif (HCl) d'une ligne de gaz (en acier inoxydable) de 4 m de longueur et d'un diamètre intérieur de 4 mm. Ladite ligne avait été préalablement parfaitement séchée à l'azote.

Les inventeurs ont suivi la teneur en eau du gaz actif débité par ladite ligne et mis clairement en évidence, sur la figure 2, la génération, dans un tuyau parfaitement sec parcouru par un courant de HCl, d'eau.

Ladite eau est, selon l'art antérieur, débitée dans le système 3. Selon l'invention, elle est évacuée, sans contacter ledit système 3.

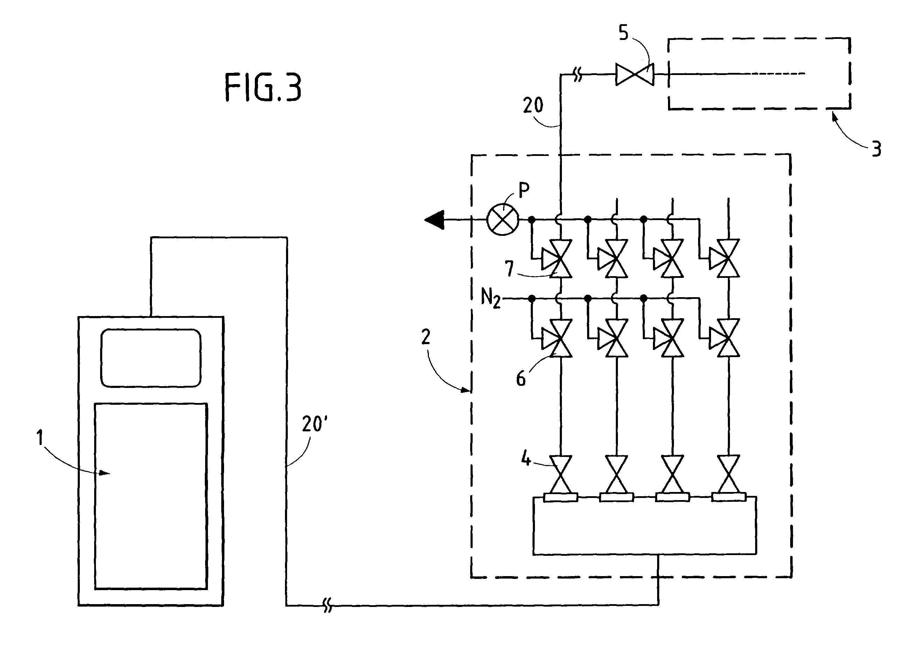

Conformément à la première variante de l'invention, illustrée sur la figure 3, on retrouve sur la ligne 20 les moyens nécessaires à sa mise en gaz inerte préalable et à son alimentation en gaz actif : les vannes 6 (pour l'alimentation en azote), la vanne d'arrêt 4 (pour l'alimentation en gaz actif), la vanne d'arrêt 5 (pour l'ouverture et la fermeture de ladite ligne 20). De façon caractéristique, on trouve en sus une vanne 7 associée à des moyens adéquats (notamment un système de pompage P) ; ladite vanne 7 (dite vanne de pompage) et lesdits moyens permettant la purge de ladite ligne 20 (sans débit dans le système 3, la vanne 5 étant fermée). Pour la mise en gaz inerte préalable de ladite ligne 20, on procède comme décrit ci-dessus en référence à la figure 1. Le gaz inerte peut être finalement évacué via la vanne 5 dans le système 3 ou *via* la vanne de pompage 7. Pour la mise en gaz proprement dite, on effectue au moins un cycle :

- de remplissage de ladite ligne 20 en gaz actif, la vanne 4 étant ouverte et la vanne 5 étant fermée ;
- d'évacuation dudit gaz actif *via* la vanne 7, les vannes 4 et 5 étant fermées.

A l'issue d'un unique cycle ou de plusieurs cycles de ce type, on met finalement en gaz actif ladite ligne 20, ledit gaz actif pouvant alors être délivré *via* la vanne 5 au système 3.

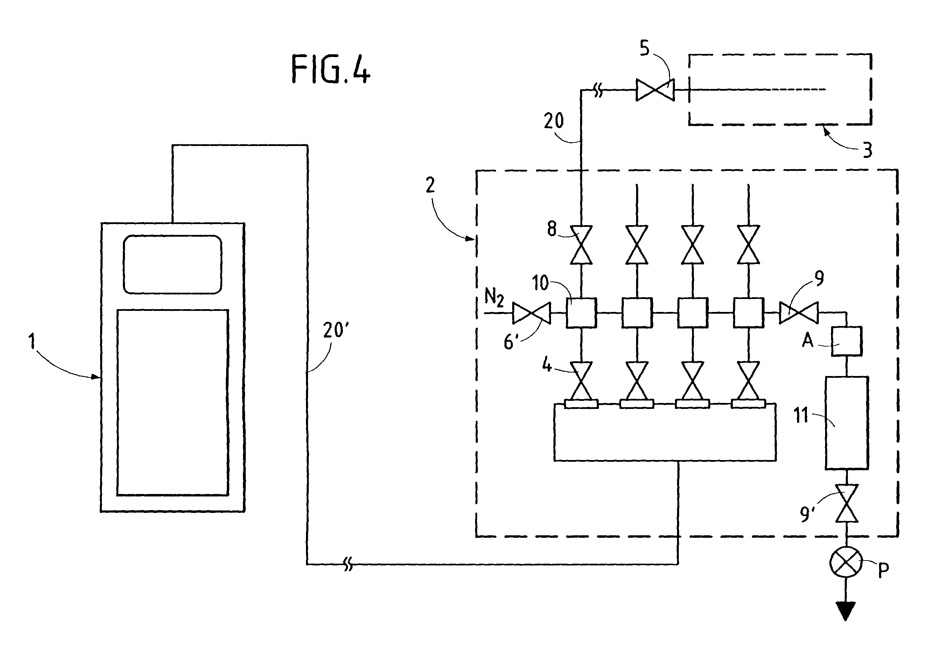

Conformément à la seconde variante de l'invention, illustrée sur la figure 4, on retrouve, sur la ligne 20 :

- une première vanne d'arrêt 4 pour l'alimentation de ladite ligne 20 en le gaz actif ;
- une seconde vanne d'arrêt 5 pour l'alimentation du système 3.

La vanne 6' montée sur la ligne d'amenée d'azote intervient pour la mise en gaz inerte préalable.

De façon caractéristique, pour la mise en oeuvre de cette variante préférée du procédé de l'invention, il intervient, en sus, une vanne quatre voies 10 et d'autres vannes tout ou rien 8, 9 et 9' ainsi qu'une colonne d'absorption 11. Pour les opérations de conditionnement, les vannes 6', 8 et 10 sont ouvertes, tandis que les vannes 4, 5 et 9 sont fermées. A l'issue desdites opérations, l'azote est évacué sur le système 3, la vanne 5 étant ouverte et la vanne 6' étant fermée.

Pour la mise en gaz proprement dite, on ferme ladite vanne 5 et on ouvre la vanne 4, la vanne 8 étant restée ouverte, et la vanne 10 permettant la communication vanne 4/vanne 8. La ligne 20 se remplit ainsi du gaz actif qui, en la passivant, se charge en eau. On se propose alors de vider ladite ligne 20 du gaz actif ainsi pollué par ladite eau. A cette fin, on referme la vanne 4, on ouvre les vannes 9 et 9' et la vanne 10 est dans une position telle qu'elle permet les communications : vanne 4/vanne 9 et vanne 8/vanne 9. Le gaz actif pompé, grâce à un système de pompage, P, disposé en aval de la vanne 9', est neutralisé sur la colonne d'absorption 11. Ainsi, il n'est pas susceptible d'endommager ledit système de pompage P.

On a prévu en amont de ladite colonne 11, un analyseur A pour mesurer l'hygrométrie dudit gaz.

On peut ainsi mettre en oeuvre plusieurs mises en gaz successives (cycles de remplissage et de vidange *via* la colonne 11) avec un suivi de l'hygrométrie du gaz actif vidangé. Lorsque la teneur en eau dudit gaz vidangé est égale à la teneur en eau du gaz introduit, on est assuré d'une passivation, totale, efficace de la ligne 20. Elle peut alors être remplie, une dernière fois, en discontinu, pour ensuite débiter le gaz actif dans le système 3.

## Revendications

1. Procédé de mise en gaz, avec passivation, d'une ligne de distribution (20) de gaz corrosif, destinée à distribuer ledit gaz corrosif à un système (3) situé en aval immédiat de ladite ligne (20) ; ledit procédé comprenant :

   - le conditionnement préalable de ladite ligne (20) ;
   - la mise en gaz proprement dite de ladite ligne (20) avec ledit gaz corrosif dit gaz actif ;

   caractérisé en ce que ladite mise en gaz proprement dite comprend :

   - au moins un cycle, de mise en gaz actif de ladite ligne (20) jusqu'à l'amont immédiat du système (3) et d'évacuation dudit gaz actif ainsi introduit dans ladite ligne (20) ; ladite évacuation étant mise en oeuvre sans passage dudit gaz actif au travers dudit système (3) ;
   - suivi de la mise en gaz finale de ladite ligne (20) pour la mise à disposition dudit gaz audit système (3).

2. Procédé selon la revendication 1, caractérisé en ce que ladite mise en gaz proprement dite comprend n cycles successifs, n étant un nombre entier supérieur à 1, de mise en gaz actif et d'évacuation dudit gaz actif, mis en oeuvre avec un suivi de la teneur en eau dudit gaz actif évacué ; la mise en gaz finale étant opérée à l'issue du $n^{ième}$ cycle, au cours duquel il n'y a pas eu génération d'eau.

3. Procédé selon l'une des revendications 1 ou 2, caractérisé en ce que ledit gaz corrosif est choisi parmi $F_2$, $Cl_2$, $Br_2$, HF, HCl, HBr, HI, $ClF_3$, et les mélanges gazeux renfermant au moins l'un de ces gaz.

4. Procédé selon l'une quelconque des revendications 1 à 3, caractérisé en ce qu'il est mis en oeuvre pour la mise en gaz d'une ligne de distribution reliant une armoire d'alimentation (1) en gaz audit système consistant en un équipement à alimenter en ledit gaz.

**5.** Procédé selon l'une quelconque des revendications 1 à 3, caractérisé en ce qu'il est mis en oeuvre pour la mise en gaz d'une ligne de distribution (20') reliant une armoire d'alimentation (1) en gaz audit système consistant en une armoire de distribution (2) et/ou pour la mise en gaz d'une ligne de distribution (20) reliant une armoire de distribution (2) audit système consistant en un équipement (3) à alimenter en ledit gaz.

**6.** Dispositif convenant à la mise en gaz, avec passivation, d'une ligne de distribution (20) de gaz corrosif ou gaz actif, destinée à distribuer ledit gaz corrosif à un système (3) situé en aval immédiat de ladite ligne (20) ; ledit dispositif comprenant :

- montées sur ladite ligne (20), une première vanne d'arrêt (4) pour l'alimentation de ladite ligne (20) en ledit gaz et une seconde vanne d'arrêt (5) pour l'alimentation dudit système (3) en ledit gaz ;
- associés à ladite ligne (20), des moyens (6) pour sa mise en gaz inerte et pour l'évacuation de celle-ci dudit gaz inerte intervenu ;

caractérisé en ce qu'il comprend en outre :

- des moyens (P) pour purger ladite ligne (20) dudit gaz actif, introduit entre lesdites première (4) et seconde (5) vannes d'arrêt ; lesdits moyens (P) permettant la mise en oeuvre de ladite purge sans passage dudit gaz actif purgé au travers dudit système (3).

**7.** Dispositif selon la revendication 6, caractérisé en ce qu'il comprend une vanne quatre voies (10), montée sur ladite ligne (20) et reliée à l'alimentation en gaz inerte et aux moyens de purge (P).

**8.** Dispositif selon l'une des revendications 6 ou 7, caractérisé en ce qu'il comprend en outre des moyens (A) pour mesurer la teneur en eau du gaz actif purgé.

FIG.1
ART ANTERIEUR

EP 1 059 482 A1

# FIG.2

EP 1 059 482 A1

FIG.3

P

N$_2$

3

5

20

2

7

6

4

20'

1

# FIG.4

**Office européen des brevets**

**RAPPORT DE RECHERCHE EUROPEENNE**

Numéro de la demande

EP 00 40 1397

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 250 162 A (TEXACO LTD ;NOWSCO WELL SERVICE LTD (GB)) 23 décembre 1987 (1987-12-23) * page 5, ligne 18 - ligne 57; figures 1,2 * | 1,6 | F17D1/04 F17D3/14 |
| A | DE 38 35 936 A (VDO SCHINDLING) 26 avril 1990 (1990-04-26) * colonne 3, ligne 35 - ligne 64; figures 1,2 * | 1,6 | |
| A | FR 2 444 882 A (PIPELINE SERVICE SA) 18 juillet 1980 (1980-07-18) * page 4, ligne 6 - ligne 20; figure 1 * | 1,6 | |
| A,D | EP 0 814 298 A (AIR LIQUIDE) 29 décembre 1997 (1997-12-29) ----- | | |

**DOMAINES TECHNIQUES RECHERCHES (Int.Cl.7)**

F17D

Le présent rapport a été établi pour toutes les revendications

| Lieu de la recherche | Date d'achèvement de la recherche | Examinateur |
|---|---|---|
| LA HAYE | 20 septembre 2000 | Christensen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**

EP 00 40 1397

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-09-2000

| Document brevet cité<br>au rapport de recherche | | Date de<br>publication | Membre(s) de la<br>famille de brevet(s) | | | Date de<br>publication |
|---|---|---|---|---|---|---|
| EP 0250162 | A | 23-12-1987 | AU | 585453 | B | 15-06-1989 |
| | | | AU | 7429887 | A | 24-12-1987 |
| | | | BR | 8703089 | A | 08-03-1988 |
| | | | CN | 87104321 | A | 23-03-1988 |
| | | | DK | 315687 | A | 21-12-1987 |
| | | | GB | 2191841 | A,B | 23-12-1987 |
| | | | JP | 63058000 | A | 12-03-1988 |
| | | | NO | 872553 | A | 21-12-1987 |
| DE 3835936 | A | 26-04-1990 | AUCUN | | | |
| FR 2444882 | A | 18-07-1980 | BE | 880412 | A | 01-04-1980 |
| | | | DE | 2950542 | A | 26-06-1980 |
| | | | DK | 537679 | A | 19-06-1980 |
| | | | ES | 486906 | D | 16-12-1980 |
| | | | ES | 8101748 | A | 16-03-1981 |
| | | | GB | 2037963 | A,B | 16-07-1980 |
| | | | IT | 1127701 | B | 21-05-1986 |
| | | | NL | 7908997 | A | 20-06-1980 |
| | | | US | 4346726 | A | 31-08-1982 |
| EP 0814298 | A | 29-12-1997 | FR | 2749924 | A | 19-12-1997 |
| | | | JP | 10122498 | A | 15-05-1998 |
| | | | US | 5900214 | A | 04-05-1999 |
| | | | US | 5922286 | A | 13-07-1999 |

EPO FORM P0460

Pour tout renseignement concernant cette annexe : voir Journal Officiel de l'Office européen des brevets, No.12/82